# EUROPEAN PATENT APPLICATION

(11) **EP 4 005 885 A1**
(43) Date of publication of application: **01.06.2022**
(21) Application number: 20847217.5
(22) Date of filing: 22.07.2020
(51) Int. Cl.: B60V 1/08, B64C 3/10

(54) **WING-IN-GROUND-EFFECT VEHICLE**

(30) Priority: 30.07.2019 RU 2019123991
(71) Applicant: Obshchestvo s Ogranichennoy Otvetstvennost'Yu "Fersel", Moscow, 125315 (RU)
(72) Inventor: SERGEEV, Victor Georgievich, Moscow, 127572 (RU)
(74) Representative: Rupprecht, Kay
(86) International application number: PCT/RU2020/000376
(87) International publication number: WO 2021/020999

(57) **Abstract**

The invention relates to wing-in-ground effect vehicles with hybrid wing type airframe design. The technical result consists in safety improvement by virtue of providing static, aperiodic and dynamic stability of the wing-in-ground effect vehicle, and in reduced lift drag by stall delaying in wing panels of the hybrid wing in the region of their attachment to the wing center section. The wing-in-ground effect vehicle has a hybrid wing with a wing center section (1) and wing panels (2), end plates (3) at tip sections of the wing center section (1), a powerplant, a vertical empennage (4) and a horizontal empennage (5) . Aspect ratio of the hybrid wing is λ=l²/(S_{CS}+2S_{W})≥2.5, aspect ratio of the wing center section (1) is 0.5≤λ_{CS}=l_{CS}²/S_{CS}≤0.9, relative area of the wing panels (2) is 0.25≤2S_{W}/S_{CS}≤0.4, longitudinal static moment of the wing-in-ground effect vehicle is 0.3≤A=(L_{HE}S_{HE}+2L_{W}S_{W}) /B_{ACS}S_{CS}≤0.6, longitudinal static moment of horizontal empennage (5) is 0.3≤A=(L_{HE}S_{HE}+2L_{W}S_{W}) /B_{ACS}S_{CS}≤0.6, wherein the longitudinal static moment of empennage projection onto a horizontal plane is 0.25A_{HE}=L_{HE}S_{HE}/B_{ACS}S_{CS}≤0.55, where l=l_{CS}+2l_{W}, lcs, lw, Scs, Sw, S_{HE} are hybrid wing, wing center section (1), wing panel (2), horizontal empennage wing spans and areas, respectively; L_{HE}, L_{W} are distances between the center of gravity of the wing-in-ground effect vehicle and 0.25 of the mean aerodynamic chord (MAC) of the horizontal empennage (5) and the wing panels (2), respectively; B_{ACS} is the MAC of the wing center section (1). The wing panels (2) are provided with a stall delay means mounted at a distance of l_{SD}/l_{W}≤0.4 from the point of coupling with the wing center section, said means being provided in the form of a wing panel (2) portion having an aerodynamic (geometric) twist, with a pitch angle ϕ_{W} decreasing towards the wing center section (1), and/or a leading edge slat (7) .

## Description

### Field of invention

The invention relates to wing-in-ground effect vehicles, namely to wing-in-ground effect vehicles with "hybrid wing" type airframe design.

### Prior art

Prior art discloses wing-in-ground effect vehicles with "hybrid wing" type airframe design.

So, the specification of patent RU 2286268 (inventors Sergeev V.G., Zhukov V.G., Novikov A.V.), IPC B60V 1/08, published 20.04.2005, [1], describes a wing-in-ground effect vehicle comprising a hybrid wing comprised of a wing center section and wing panels attached thereto, end plates mounted to tip sections of the wing center section, a powerplant, and empennage, the wing center section is provided with control and lift surfaces, the control and lift surfaces of the rear trailing edge of the wing center section are provided with at least one pivot axis, aspect ratio of the hybrid wing is λ=l²/(S_{CS}+2S_{W})≥2.5, aspect ratio of the wing center section is 0.5≤λ_{CS}=l_{CS}²/S_{CS}≤0.9.

The invention of [1] is characterized in that the wing-in-ground effect vehicle has a relative area of the wing panels which is 0.3≤2S_{W}/S_{CS}≤0.6, and static moment of horizontal empennage and wing panels is 0.25≤A=(L_{HE}S_{HE}+2L_{W}S_{W})/B_{ACS}S_{CS}≤0.45 and static moment of the wing panels is 0.06≤A_{W}=2L_{W}S_{W}/B_{ACS}S_{SC}≤0.11, where:
l=l_{CS}+2l_{W}, lcs, lw are wing span of the hybrid wing of the wing-in-ground effect vehicle, wing center section, and wing panel, respectively;
Scs, Sw, S_{HE} are areas in plan view of the wing central section, wing panel, and horizontal empennage, respectively;
L_{HE}, Lw are segments of horizontal empennage and wing panels which are equal to projections onto the longitudinal axis of the wing-in-ground effect vehicle of distances between the center of gravity of the ground effect vehicle and 0.25 of the mean aerodynamic chord of the horizontal empennage and the wing panels, respectively;
B_{ACS} is the mean aerodynamic chord of the wing central section.

Studies have shown that this range of static moment values of wing panels A_{W} and the wing-in-ground effect vehicle A=A_{W}+A_{HE} corresponds to the necessary condition of static and aperiodic stability according to R.D. Irodov criterion for fast movement, which relates to the positional relationship between the aerodynamic focus in terms of the pitch angle Xfϑ=dMz/dCy (h=const) and that in terms of relative height Xfh=dMz/dCy (ϑ=const): Xfh<Xfϑ, i.e. the aerodynamic focus in terms of height is located closer to the wing leading edge than the aerodynamic focus in terms of pitch angle. However, given the range of longitudinal static moment values for wing panels A_{W} and the horizontal empennage A_{HE}=A-A_{w} as specified in the invention, which is critical for oscillatory stability, the oscillatory stability of the ground effect vehicle may not be ensured, which is a drawback of invention [1].

Besides, report "On Some Specificities of Aerohydromechanics of Type "B" Wing-in-Ground Effect Vehicles" by Varakosov Yu.G., Makienko A.M., Sergeev V.G., presented on 04.04.2017 at the Seminar on Aeromechanics in TsAGI - IPTM SO RAN - SPbPU-NIIM M, [2], shows that a stall occurs at a point of coupling of wing panels to the wing central section due to an increase in the effective angle of attack when air escapes the high pressure zone under the wing central section, wherein the pitch angle at which the stall occurs will become smaller as the ground approaches and when jets from the air propelling unit are blown under the wing due to an increase in a static component of total pressure under the wing central section. No stall delay means are provided at the point of coupling of the wing panels with the wing center section are provided in the invention [1]. This is also a drawback of invention [1].

In the specification of utility model patent RU 136773 (inventors Antsev G.V., Blokhin V.N., Nechaev A.V., Platonov S.V., Prokhorov V.M.), IPC B60V 1/08, published 20.01.2014, [3], a wing-in-ground effect vehicle is disclosed, which comprises a hybrid wing comprised of a wing center section and wing panels attached thereto, end plates mounted to tip sections of the wing center section, a powerplant, and empennage, the wing center section is provided with control and lift surfaces, the control and lift surfaces of the rear trailing edge of the wing center section are provided with at least one pivot axis, the wing panels are provided with a stall delay means.

The wing-in-ground effect vehicle of invention [3] is characterized by the wing panels having wing strakes at the point of coupling of the wing panels to the wing central section, and the stall delay means is provided in the form of geometric twist along the whole wing span of the wing strakes and the wing panels, with a negative pitch angle of the wing strake adjacent to the wing center section, and gradually increasing pitch angle of the wing strake and the wing sections along the whole wing span, up to positive pitch angle values at end sections of the wing panels. This makes the structure of the wing panels and the strake complicated, which is a drawback of the ground effect vehicle provided in the specification of utility model [3].

In the specification of patent RU 2532658 (inventors Aladyin V.V., Aladyina M.V.), IPC B64C 35/00, B60V 1/08, published 27.02.2014, [4], a ground effect vehicle is disclosed, which comprises a hybrid wing comprised of a wing center section and wing panels attached thereto, end plates mounted to tip sections of the wing center section, a powerplant, and empennage, the wing center section is provided with control and lift surfaces, the control and lift surfaces of the rear trailing edge of the wing center section are provided with at least one pivot axis, the wing panels are provided with a stall delay means, the stall delay means being provided in the form of leading edge slats. The invention [4] is characterized in that the ground effect vehicle is provided with a hybrid wing comprising a wing center section, wing panels attached thereto, wing panels being also attached to the latter, wherein the leading edges of the wing central section, inner and outer wing panels are arranged in a staggered manner, and end plates or floats are mounted between the wing center section and the wing panels. Leading edge slats are arranged on all wing panels along the whole wing span and, according to the specification of invention [4], are intended for increasing lift factor. However, each of the four "jaggies" in the leading edge of the hybrid wing causes separation of vortices which increase the lift drag in each of the wing panels, which reduces the lift-to-drag ratio of the hybrid wing as compared to a hybrid wing with only 2 "jaggies" such as e.g. in invention [1]. Thus, the complexity of a "cascade" hybrid wing is a drawback of invention [4].

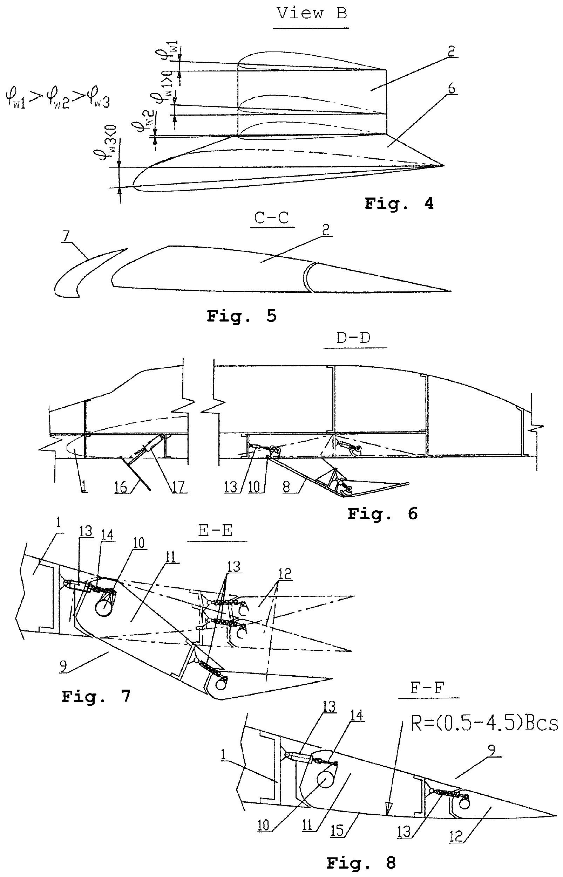

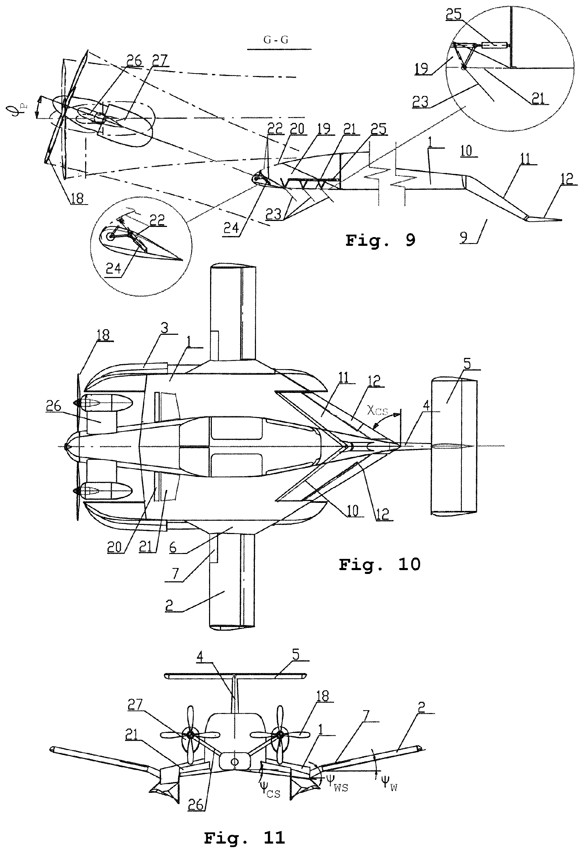

In the specification of invention RU 2222477 (inventors Panatov G.S., Lavro N.A., Zabaluev I.M., Vorontsov V.P.), IPC B64C 35/00, published 27.01.2004, [5], a hydroplane is described, which has a wing comprised of a wing center section and wing panels attached thereto, the wing panels being provided with a stall delay means provided in the form of leading edge slats with a shaped slit (referred to as "wing top slats 8"). The wing of [5] is characterized in that its wing center section has a high sweep angle of the leading edge (greater than 70 degrees) and that the leading edge slats span by 0.6-0.7 of the wing span of the wing panel from the wing panel tip side. Such arrangement of the leading edge slats delays the stall at high angles of attack, increasing the lift factor and the stalling angle. This is confirmed by aviation engineering practice and described e.g. in a book "Light passenger aircraft design" by A.N. Arepiev, Moscow, MAI Publishing House, 2006, pp. 302-307, figs. 9.9.10, [6]. According to the diagram provided in fig. 9.9.10 in book [6], increase in lift when a leading edge slat is extended occurs when relative wing span of the leading edge slat is greater than 0.4, which corresponds to the range specified in invention [5]. At the same time, flow visualization provided in Fig. 8 of invention [5] shows that, when the leading edge slat ("wing top slat 8") is provided, stall zone shifts to the point of attachment of the wing panel to the wing center section. Apparently, closer the surface, this would cause stall at lower angles of attack, which is a drawback of the hydroplane wing provided in invention [5].

The wing-in-ground effect vehicle provided in the specification of invention [1] is regarded as the closest analogue of the claimed ground effect vehicle.

### Summary of invention

The technical problem to be resolved consists in enhancing stability while increasing the lift-to-drag ratio of the ground effect vehicle.

The technical result consists in safety improvement by virtue of providing static, aperiodic and dynamic stability of the ground effect vehicle.

The technical result also consists in reduced lift drag by stall delaying in wing panels of the hybrid wing in the region of their attachment to the wing center section.

Essence of the invention is as follows.

Like the closest analogue of [1], the ground effect vehicle comprises a hybrid wing comprised of a wing center section and wing panels attached thereto, end plates mounted to tip sections of the wing center section, a powerplant, and empennage, the wing center section is provided with control and lift surfaces, the control and lift surfaces of the trailing edge of the wing center section are provided with at least one pivot axis, aspect ratio of the hybrid wing is λ=l²/(S_{CS}+2S_{W})≥2.5, aspect ratio of the wing center section is 0.5≤λ_{CS}=l_{CS}²/S_{CS}≤0.9, however, unlike the closest analogue of [1], the wing panels are provided with a stall delay means, which is mounted at the point of coupling of the wing panel with the wing center section at a distance being not more than 0.4 times the wing span of the wing panel from the point of coupling of the wing panel to the wing center section, relative area of the wing panels is 0.25≤2S_{W}/S_{CS}≤0.4, longitudinal static moment of empennage and wing panels is 0.3≤A=(L_{HE}S_{HE}+2L_{W}S_{W}) /B_{ACS}S_{CS}≤0.6, wherein the static moment of empennage projection onto a horizontal plane is 0.25≤A_{HE}=L_{HE}S_{HE}/B_{ACS}S_{CS}≤0.55, where l=l_{CS}+2l_{W}, lcs, lw are wing span of the hybrid wing, wing center section and wing panel, respectively; Scs, Sw, S_{HE} are areas in plan view of the wing center section, wing panel and empennage projection onto a horizontal plane, respectively; L_{HE}, Lw are segments of empennage and wing panels projections onto the horizontal plane which are equal to projections of distances between the center of gravity of the wing-in-ground effect vehicle and 0.25 of the mean aerodynamic chord of the projections on the horizontal plane of the empennage and the wing panels, respectively, on the longitudinal axis of the wing-in-ground effect vehicle, B_{ACS} is the mean aerodynamic chord of the wing central section.

The wing-in-ground effect vehicle is characterized in that the stall delay means is provided in the form of a wing panel portion having an aerodynamic twist, with a pitch angle of the wing panel decreasing towards the wing center section.

The wing-in-ground effect vehicle is characterized in that the stall delay means is provided in the form of a leading edge slat.

The wing-in-ground effect vehicle is characterized in that the stall delay means is provided in the form of a leading edge slat mounted at the wing panel portion having the aerodynamic twist, with a pitch angle of the wing panel profile decreasing towards the wing center section.

The wing-in-ground effect vehicle is characterized in that the control and lift surfaces of the trailing edge of the wing center section are provided in the form of two-section wing flaps, each of the wing flap sections is configured to pivot both downwards and upwards, and a kinematic link between a power drive and the wing flap comprises an elastic member.

The wing-in-ground effect vehicle is characterized in that the bottom profile line of longitudinal cross-section of a wing flap of the wing center section is provided in the form of an arc with an arc radius of 0.5-4.5 of the center wing section chord, and the arc center located above an upper surface of the wing center section.

The wing-in-ground effect vehicle is characterized in that the lift and control surfaces of the leading edge of the wing center section are provided in the form of flaps arranged along the wing span of the wing center section.

The wing-in-ground effect vehicle is characterized in that an air propelling unit of the powerplant is arranged in front of the wing center section and configured to vary the elevation angle of a jet created by the air propelling unit, the control and lift surfaces of the wing center section leading edge are provided in the form of a duct in the front part with panels for closing the inlet and outlet of the duct, wherein, in any longitudinal cross-section, edges of the duct on the upper surface are located closer to the wing center section leading edge than respective edges of the duct on the lower surface, and each panel comprises an actuator for moving the same.

The wing-in-ground effect vehicle is characterized in that the wing center section has a forward sweep of its trailing edge and a negative wing angle to the horizontal, the end plates are provided in the form of floats, and the wing panels are provided with wing strakes coupled to the wing center section, wherein the wing angle to the horizontal of the wing strakes is larger than the wing angle to the horizontal of the wing panels.

### Brief description of the drawings

In the following, the invention is explained by means of a detailed description of embodiments of the wing-in-ground effect vehicle with reference to the appended drawings, in which:
The invention is explained by drawings.
Fig. 1 shows a plan view of the wing-in-ground effect vehicle with the stall delay means provided in the form of geometric twist in the right wing panel and in the form of a leading edge slat in the left wing panel.
Fig. 2 shows the side view of the wing-in-ground effect vehicle.
Fig. 3 shows view A of Fig. 1.
Fig. 4 shows a stall delay means provided in the form of geometric twist in the wing panel in view B of Fig. 1.
Fig. 5 shows cross-section C-C in Fig. 1 with the stall delay means provided in the form of a leading edge slat.
Fig. 6 shows cross-section D-D in Fig. 1 with control and lift surfaces of the leading and trailing edges of the wing center section provided in the form of flaps.
Fig. 7 shows cross-section E-E in Fig. 1 with the two-section wing flaps of the wing center section.
Fig. 8 shows cross-section F-F in Fig. 1 with the bottom profile line of the wing flap of the wing center section provided in the form of an arc.
Fig. 9 shows cross-section G-G in Fig. 1 with the control and lift surfaces at the leading edge of the wing center section provided in the form of a duct with panels for closing the inlet and outlet of the duct.
Fig. 10 shows a plan view of a preferred embodiment of the ground effect vehicle.
Fig. 11 shows a front view of a preferred embodiment of the ground effect vehicle.
Fig. 12 shows flow visualization in the area of wing panel attachment to the wing center section taken over a static surface in a wind tunnel.
Fig. 13 shows an example of dependency Cy(ϑ, h=const) which illustrates the influence of stall in the area of wing panel attachment to the wing center section in the ground effect zone.
Fig. 14 shows flow visualization over a static screen from a wing tunnel test of a model with a flow-through air cushion.

### Best modes of the invention

The inventive wing-in-ground effect vehicle is configured in the following manner.

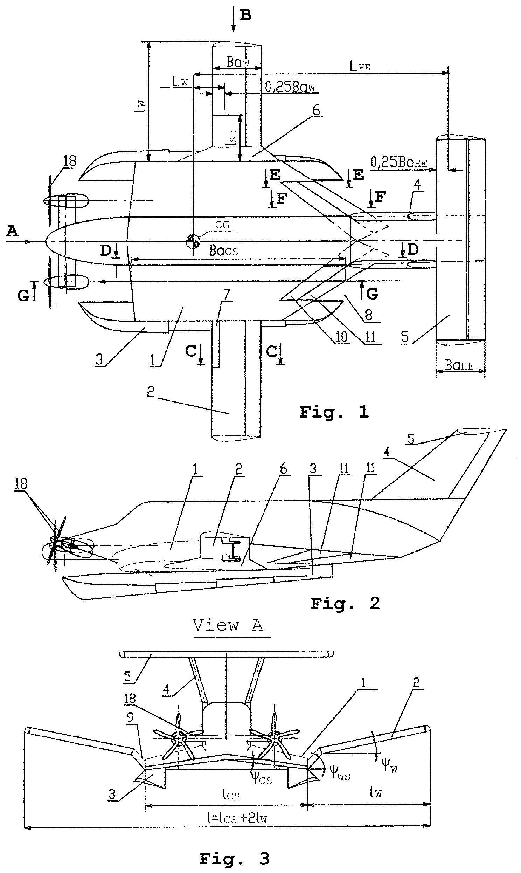

The wing-in-ground effect vehicle comprises a hybrid wing comprised of a wing center section 1 and wing panels 2 attached thereto, end plates 3 mounted to tip sections of the wing center section 1, a powerplant, and empennage which may be V-shaped, with vertical empennage 4 (single-finned or double-finned) and horizontal empennage 5 mounted on the fin of the vertical empennage 4 (Figs. 1, 2, 3).

Aspect ratio of the hybrid wing is λ=l²/(S_{CS}+2S_{W})≥2.5, aspect ratio of the wing center section 1 is within 0.5≤λ_{CS}=l_{CS}²/S_{CS}≤0.9, relative area of the wing panels 2 is 0.25≤2S_{W}/S_{CS}≤0.4, longitudinal static moment value for empennage projection on a horizontal plane A_{HE}=L_{HE}SHE/B_{ACS}S_{CS}, and that of wing panels 2 A_{W}=2L_{W}S_{W}/B_{ACS}S_{CS} are within 0.3≤A=(L_{HE}S_{HE}+2L_{W}S_{W}) /B_{ACS}S_{CS}≤0.6, wherein the longitudinal static moment of empennage projection on a horizontal plane, e.g. for horizontal empennage A_{HE}, is 0.25≤A_{HE}=L_{HE}SHE/B_{ACS}SCS≤0.55, where l=l_{CS}+2l_{W}, lcs, lw are wing span of the hybrid wing, wing center section 1 and wing panel 2, respectively; Scs, Sw, S_{HE} are areas in plan view of the wing center section 1, wing panel 2 and empennage, respectively; L_{HE}, L_{W} are segments of empennage (e.g. horizontal empennage 5) and wing panels 2 projections onto the horizontal plane, which are equal to projections of distances between the center of gravity of the wing-in-ground effect vehicle and 0.25 of the mean aerodynamic chord of the empennage (e.g. horizontal empennage 5) and wing panels 2 projections on the horizontal plane, respectively, on the longitudinal axis of the wing-in-ground effect vehicle, B_{ACS} is the mean aerodynamic chord of the wing central section 1 (Fig. 1).

The wing panels 2 are provided with stall delay means mounted in the area of coupling of the wing panel 2 with the wing center section 1 at a distance l_{SD} which is not greater than 0.4 times the wing span lw of the wing panel 2 from the point of attachment of the wing panel 2 to the wing center section 1: l_{SD}/l_{W}≤0.4. When the wing panels 2 are provided with wing strakes 6, the wing span l_{W} and area Sw of the wing panels 2 include the wing span and area of the wing strakes 6. The wing panels 2 may also be provided with trailing edge control and lift surfaces and ailerons, e.g. differential ailerons (not indicated in the figures).

The stall delay means may be provided in the form of a wing panel 2 portion with aerodynamic and/or geometric twist, with pitch angle of the wing panel 2 ϕ_{w} decreasing towards the wing center section 1 (Fig. 4). The stall delay means may also be provided in the form of a leading edge slat 7 with wing span l_{LES} being no greater than 0.4 times the wing span of the wing panel 2: l_{LES}/l_{W}≤0. 4 (Figs. 1, 5) . The leading edge slat 7 may be provided with an actuator for moving the same (not shown in the figures), or may be stationary, permanently extended. The stall delay means may also be provided in the form of a wing panel 2 portion with aerodynamic and/or geometric twist with pitch angle of the wing panel 2 ϕ_{w} decreasing towards the wing center section 1, and a leading edge slat 7 (not shown in the figures). The wing strake 6 may be provided with aerodynamic and/or geometric twist, and the wing panel 2 may be provided with a leading edge slat 7.

The wing center section 1 may be provided with trailing and leading edge control and lift surfaces. The trailing edge control and lift surfaces of the wing center section 1 may be provided in the form of a flap 8 (Fig. 6) or wing flap 9 with at least one pivot axis 10 arranged along the wing span of the wing center section 1 (Figs. 1, 7). In a preferred embodiment, the trailing edge control and lift surfaces of the wing center section 1 is provided in the form of plain (simple) two-section wing flaps 9, the first 11 and second 12 sections of the wing flaps 9 being configured to be pivoted upwards and downwards (Fig. 7). Kinematic link of a power drive 13 and the flap 8 or wing flap 9 comprises an elastic member provided in the form of e.g. a damper 14. The profile line 15 of the bottom surface of longitudinal cross-section of the wing flap 9 of the wing center section 1 is provided in the form of an arc with a radius-to-chord ratio being R/Bcs=0.5-4.5 of wing center section chord Bcs, and the center of the arc being located above the upper profile line of the longitudinal cross-section of the wing flap 9 of the wing center section 1 (Fig. 8).

The control and lift surfaces of the wing center section 1 may be provided in the form of flaps 16 mounted along the wing span of the wing center section 1 and provided with a power drive 17 for pivoting the same (Fig. 6). When the powerplant of the wing-in-ground effect vehicle is provided in the form of an air propelling unit, e.g. a propeller 18 mounted in front of the wing center section 1 and configured to vary the elevation angle ϕ_{P} of a jet created by the air propelling unit, the control and lift surfaces of the leading edge may be provided in the form of a duct 19 in the front part of the wing center section 1, with the inlet 20 and outlet 21 provided with panels 22, 23 for closing the duct 19, wherein, in any longitudinal cross-section, edges of the duct 19 on the upper surface are located closer to the leading edge of the wing center section 1 than those on the lower surface of the wing center section 1, and each of the panels 22 and 23 comprises actuators 24 and 25, respectively, for moving the same (Fig. 9).

In a preferred embodiment of the wing-in-ground effect vehicle, the wing center section 1 has a forward sweep (X_{TECS}<0) of its trailing edge and a negative wing angle to the horizontal (ψ_{CS}<0), the end plates 3 are provided in the form of floats, and the wing panels 2 are provided with wing strakes 6 coupled to the wing center section 1, wherein the wing angle to the horizontal of the wing strakes 6 ψ_{WS} is not smaller than the wing angle to the horizontal of the wing panels 2 ψ_{W}: ψ_{WS}≥ψ_{W}, and the stall delay means is provided in the form of geometric and/or aerodynamic twist of the wing strake 6 and a leading edge slat 7 at the wing panel 2 with wing span l_{SD}/l_{W}≤0.4 (Figs. 10, 11). The powerplant comprises engines 26 with propellers 18 mounted in front of the wing center section 1 on a tiltable pylon 27, providing for tilting the air jet, and the wing center section 1 is provided with leading edge control and lift surfaces in the form of a duct 19 with panels 22 and 23 at the inlet 20 and outlet 21 of the duct 19, provided with power drives 24 and 25. The trailing edge control and lift surfaces of the wing center section 1 are provided in the form of two-section plain (simple) wing flaps 9 and a body flap 8 pivoted by power drive 13 comprising an elastic member 14. Sections 11 and 12 of the wing flap 9 may be pivoted upwards and downwards, wherein the flaps 8 are provided with their own power drives. The bottom profile line 15 of the wing flap 9 is provided in the form of an arc with a radius-to-chord ratio being R/Bcs=3.0 and the center of the arc above the upper profile line of the wing flap 9. Aspect ratio of the wing center section 1 is λ_{CS}=l_{CS}²/S_{CS}≈0.8, relative area of the wing panels is 2Sw/Scs=0.30-0.35, longitudinal static moment of horizontal empennage 5 is A_{HE}=L_{HE}S_{HE}/B_{ACS}S_{CS}≈0.45, and that of the horizontal empennage and the wing panels is A=A_{HE}+A_{W}≈0.5.

The wing-in-ground effect vehicle functions as follows.

Before takeoff, the wing-in-ground effect vehicle is switched to takeoff configuration (solid lines in Figs. 6 and 7), namely the flaps 8 are pivoted downwards, the first sections 11 of the wing flaps 9 of the wing center section 1 are pivoted downwards by the power drive 13, the second sections 12 are pivoted upwards relative to the first sections 11, the leading edge control and lift surfaces of the wing center section are extended into the takeoff configuration.

In case the wing-in-ground effect vehicle is provided with a flow-through air cushion, the air propelling unit, e.g. propeller 18, is tilted to a position which provides for tilting the air jet downwards by an angle of ϕ_{P}. When the leading edge of the wing center section 1 is provided with control and lift surfaces in the form of a duct 19, panels 22 and 23 are pivoted by the actuators 24 and 25 to open the inlet 20 and outlet 21 of the duct 19 (Fig. 9).

To delay the stall on the wing panels 2 (in particular, with strakes 6) during takeoff, in particular when flow-through air cushion is used, stall prevention means provided in the form of leading edge slat 7 is pivoted into an operational position.

After takeoff run and takeoff, the wing-in-ground effect vehicle is switched to a cruising configuration, namely the flaps 8 and wing flaps 9 are pivoted by the power drive 13 to a retracted (default) position, the air propeller unit provided e.g. in the form of propeller 18 is tilted to reduce the angle ϕ_{P}, the leading edge control and lift surfaces of the wing center section 1 in the form of flaps 16 are raised (dotted lines in Figs. 6, 7, 9). The inlet 20 and outlet 21 of the duct 19 are closed by panels 22 and 23. The wing-in-ground effect vehicle performs a cruising flight using the ground effect.

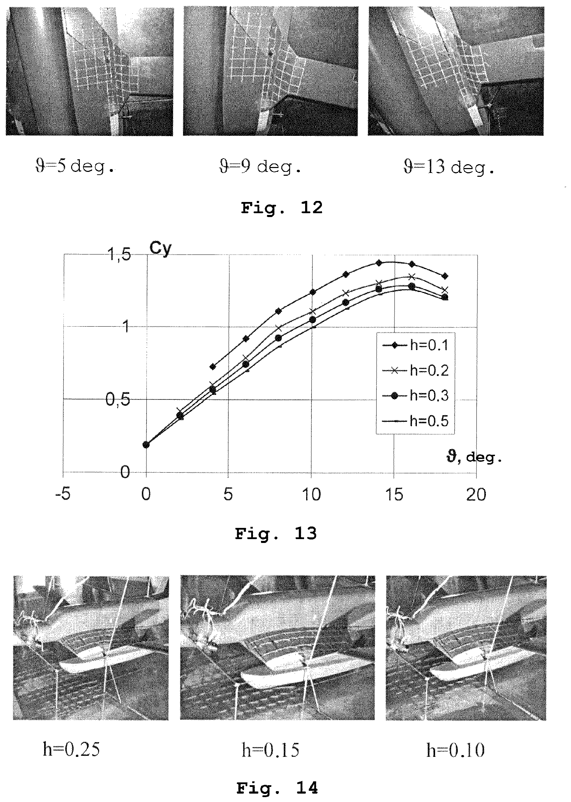

Wind tunnel experimental tests have shown that air flows out of a high pressure area under the wing center section 1, thus increasing the effective angle of attack of the wing panels 2 in the area of their coupling to the wing center section 1. As shown in the flow visualization for a model over a static surface in a wind tunnel in Fig. 12, increase in the effective angle of attack leads to a stall (threads are deflected under a large angle to the direction of flow). As shown in the diagram Cy(d, h=const) in Fig. 13, this reduces the derivative of lift factor Cy by pitch angle. Flow-through air cushion increases the static component of total pressure under the wing center section 1, which, as shown in Fig. 14, leads to an increase in the angle of deflection of the threads over a static surface in the direction of flow when the model being tested in the wind tunnel approaches the surface. As a result, effective angle of attack is increased and slipstream develops at lower pitch angles than without flow-through air cushion, which reduces the lift of the wing-in-ground effect vehicle during takeoff and landing.

To prevent early stall, the wing panels 2 of the wing-in-ground effect vehicle are provided with a stall delay means in the area of their attachment to the wing center section (including the case where the wing panels 2 are provided with wing strakes 6). When the stall delay means is provided in the form of geometric twist, effective angles of attack are reduced by means of negative geometric twist and the relative wing span being not greater than 0.4 times the wing span of the wing panel 2: l_{SD}/l_{W}≤0.4. When the stall delay means is provided in the form of a leading edge slat 7 of the wing panel 2, the stall is delayed by means of an air jet being blown out of a slit of the leading edge slat 7 to the upper surface of the wing panel 2. This results in attached flow over the area of attachment of the wing panel 2 to the wing center section 1 (including the case where the wing panels 2 are provided with wing strakes 6) at high pitch angles. Thus lift drag is reduced and lift-to-drag ratio is increased, and the range of pitch angles (and hence lift factor and flight speed) in the cruising mode of ground effect flight is also increased.

The range of height values over the surface and of the pitch angles in the cruising mode of travel is defined by conditions of dynamic, static and aperiodic stability. The necessary condition of aperiodic stability is that the aerodynamic focus in terms of height Xfh=dMz/dCy (ϑ=const) must be ahead of the aerodynamic focus in terms of pitch angle Xfa=dMz/dCy (h=const), and the necessary condition of static and dynamic stability is that the aerodynamic focus in terms of pitch angle Xfa must be behind the center of gravity X_{CG} of the wing-in-ground effect vehicle: Xfh<Xfa; X_{CG}<Xfa.

It is known that, in order to obtain good stability and controllability, aerodynamic focus in terms of height should be located in the center of gravity or near the latter, and the distance between the focuses should be large: X_{CG}≈Xfh<Xfa.

Aspect ratio of the wing-in-ground effect vehicle being λ>2.5 provides for sufficient lift-to-drag ratio when climbing to altitudes beyond the ground effect zone. Achievement of longitudinal static moment of empennage projection (e.g. horizontal empennage 5) and wing panels 2 in the range of 0.3≤A=(L_{HE}S_{HE}+2L_{W}S_{W}) /B_{ACS}S_{CS}≤0.6 provides for the wing-in-ground effect vehicle's own static and aperiodic stability. Aerodynamic profile of the wing center section 1 having an S-shaped center line, e.g. by making the bottom profile line 15 of the wing flap 9 in the form of an arc with a radius-to-chord ratio being 0.5≤R/B_{CS}≤4.5, and the center of the arc being located above the upper profile line of the wing flap 9 provides for a broader range of pitch angles and altitudes, within which the necessary condition of aperiodic stability according to the R.D. Irodov criterion for fast movement is met. The first 11 and second section 12 of the wing flap 9 being configured to pivot downwards and upwards provide for adjusting the S-shape parameters of the center line of the profile. This makes it possible to adjust the aerodynamic focus position in terms of height in order to meet the necessary condition of aperiodic stability according to the R.D. Irodov criterion and to align the aerodynamic focus position in terms of height Xfh with the center of gravity X_{CG} of the ground effect vehicle, |Xfh-X_{CG}|≤0.02, which facilitates pilot control and improves the safety of the wing-in-ground effect vehicle.

Oscillatory stability is enabled by achieving the longitudinal static moment of horizontal empennage 5 in the range of 0.25≤A_{HE}≤0.55 by increasing the damping moment dm_{z}/dω_{z} in non-stationary curvilinear (in particular, oscillatory) motion, proportional to the value of (S_{HE}/S_{CS}) × (L_{HE}/B_{ACS})². As a result, safety is improved by ensuring static, aperiodic and oscillatory stability of the wing-in-ground effect vehicle.

Thus, the combination of features provided in the specification provides for improved safety by ensuring static, aperiodic and oscillatory stability of the wing-in-ground effect vehicle while reducing lift drag by delaying stall at wing panels of the hybrid wing in the area of its coupling to the wing center section and, hence, increasing lift-to-drag ratio, broadening the range of pitch angles and altitudes.

### Industrial applicability

The disclosure of the wing-in-ground effect vehicle structure is sufficient for implementing the invention in wing-in-ground effect vehicle design and production by specialized institutions and achieving the technical result as specified. The invention meets the patentability requirement of "industrial applicability".

### List of reference numerals and signs for Figures for invention "Wing-in-Ground Effect Vehicle"

1 - wing center section;
2 - wing panel;
3 - end plate;
4 - vertical empennage;
5 - horizontal empennage;
6 - wing strake of wing panel 2;
7 - leading edge slat of wing panel 2;
8 - flap of wing center section 1;
9 - wing flap of wing center section 1;
10 - pivot axis of trailing edge control and lift surfaces of wing center section 1;
11 - first section of wing flap 9;
12 - second section of wing flap 9;
13 - power drive of flap 8 and/or wing flap 9;
14 - damper of power drive 13 of flap 8 and/or wing flap 9;
15 - lower surface profile line of longitudinal cross-section of wing flap 9;
16 - flap of the leading edge control and lift surfaces of the wing center section 1;
17 - power drive of the leading edge flap 16 of the wing center section 1;
18 - propeller;
19 - duct of the leading edge control and lift surfaces of the wing center section 1;
20 - inlet of the duct 19;
21 - outlet of the duct 19;
22 - panel of the inlet 20 of the duct 19;
23 - panel of the outlet 21 of the duct 19;
24 - power drive for moving the panel 22 of the duct 19;
25 - power drive for moving the panel 23 of the duct 19;
26 - engine with propeller 18;
27 - tiltable pylon 27 with engines 26 with propellers 18.
λ=l²/(S_{CS}+2S_{W}) - aspect ratio of the hybrid wing;
λ_{CS}=l_{CS}²/S_{CS} - aspect ratio of the wing center section 1;
2Sw/Scs - relative area of the wing panels 2;
A_{HE}=L_{HE}S_{HE}/B_{ACS}S_{CS} - longitudinal static moment of the wing panels 2;
l=l_{CS}+2l_{W} - wing span of the hybrid wing;
l_{CS} - wing span of the wing center section 1;
l_{W} - wing span of wing panel 2;
S_{CS} - wing center section 1 area in plan view;
S_{W} - wing panel 2 area in plan view;
S_{HE} - area of empennage and horizontal empennage 5 projection in plan view;
L_{HE} - segment of empennage and horizontal empennage 5 projection, which is equal to projection of horizontal empennage on the longitudinal axis of the wing-in-ground effect vehicle of the distance between the center of gravity of the wing-in-ground effect vehicle and 0.25 of the mean aerodynamic chord of the empennage and horizontal empennage 5;
Lw - segment of wing panels 2 which is equal to projection of distance between the center of gravity of the wing-in-ground effect vehicle and 0.25 of the mean aerodynamic chord of the wing panels 2 on the longitudinal axis of the wing-in-ground effect vehicle;
B_{ACS}(B_{CS}) - mean aerodynamic chord (chord) of the wing center section 1;
l_{SD} - wing span of stall delay means mounted in the area of coupling of the wing panel 2 to the wing center section 1;
l_{LES} - wing span of stall delay means provided in the form of leading edge slat of wing panel 2;
R - arc radius of the lower surface profile line of longitudinal cross-section of wing flap 8;
ϕ_{W} - pitch angle of wing panel 2 or wing strake 6;
ϕ_{P} - elevation angle of a jet created by the air propelling unit;
X_{TECS} - sweep angle of the trailing edge of the wing center section 1;
ψ_{CS} - wing angle to the horizontal of the wing center section 1;
ψ_{WS} - wing angle to the horizontal of wing strake 6 of the wing panel 2;
ψ_{W} - wing angle to the horizontal of the wing panels 2.

## Claims

1. A wing-in-ground effect vehicle comprising a hybrid wing comprised of a wing center section and wing panels attached thereto, end plates mounted to tip sections of the wing center section, a powerplant, and empennage, the wing center section is provided with control and lift surfaces, the control and lift surfaces of the trailing edge of the wing center section are provided with at least one pivot axis, aspect ratio of the hybrid wing is λ=l²/(S_{CS}+2S_{W})≥2.5, aspect ratio of the wing center section is 0.5λ_{CS}=l_{CS}²/S_{CS}≤0.9, **characterized in that** the wing panels are provided with a stall delay means, the stall delay means is mounted at the point of coupling of the wing panel with the wing center section and is arranged at a distance being not more than 0.4 times the wing span of the wing panel from the point of coupling of the wing panel to the wing center section, relative area of the wing panels is 0.25≤2S_{W}/S_{CS}≤0.4, longitudinal static moment of horizontal empennage and wing panels is 0.3≤A=(L_{HE}S_{HE}+2L_{W}S_{W}) /B_{ACS}S_{CS}≤0.6, wherein the longitudinal static moment of empennage projection onto a horizontal plane is 0.25≤A_{HE}=L_{HE}S_{HE}/B_{ACS}S_{CS}≤0.6, where l=l_{CS}+2l_{W}, l_{CS}, l_{W} are the wing span of the hybrid wing, wing center section and wing panel, respectively; Scs, Sw, S_{HE} are areas in plan view of the wing center section, wing panel and empennage, respectively; L_{HE}, Lw are segments of empennage and wing panels projections onto the horizontal plane which are equal to projections of distances between the center of gravity of the wing-in-ground effect vehicle and 0.25 of the mean aerodynamic chord of the empennage and the wing panels, respectively, on the longitudinal axis of the wing-in-ground effect vehicle, B_{ACS} is the mean aerodynamic chord of the wing central section.

2. The wing-in-ground effect vehicle of claim 1, **characterized in that** the stall delay means is provided in the form of a wing panel portion having an aerodynamic twist, with a pitch angle of the wing panel decreasing towards the wing center section.

3. The wing-in-ground effect vehicle of claim 1, **characterized in that** the stall delay means is provided in the form of a leading edge slat.

4. The wing-in-ground effect vehicle of claim 1, **characterized in that** the stall delay means is provided in the form of a leading edge slat mounted at the wing panel portion having the aerodynamic twist, with a pitch angle of the wing panel profile decreasing towards the wing center section.

5. The wing-in-ground effect vehicle of claim 1, **characterized in that** the control and lift surfaces of the trailing edge of the wing center section are provided in the form of two-section wing flaps, each of the wing flap sections is configured to pivot both downwards and upwards, and a kinematic link between a power drive and the wing flap comprises an elastic member.

6. The wing-in-ground effect vehicle of claim 5, **characterized in that** the bottom profile line of a wing flap of the wing center section is provided in the form of an arc with an arc radius of 0.5-4.5 of the center wing section chord, and the arc center located above an upper surface of the wing center section.

7. The wing-in-ground effect vehicle of claim 1, **characterized in that** the control and lift surfaces of the leading edge of the wing center section are provided in the form of flaps arranged along the wing span of the wing center section.

8. The wing-in-ground effect vehicle of claim 1, **characterized in that** an air propelling unit of the powerplant is arranged in front of the wing center section and configured to vary the elevation angle of a jet created by the air propelling unit, the control and lift surfaces of the wing center section leading edge are provided in the form of a duct in the front part with panels for closing the inlet and outlet of the duct, wherein, in any longitudinal cross-section, edges of the duct on the upper surface are located closer to the wing center section leading edge than respective edges of the duct on the lower surface, and each panel comprises an actuator for moving the same.

9. The wing-in-ground effect vehicle of claim 1, **characterized in that** the wing center section has a forward sweep of its trailing edge and a negative wing angle to the horizontal, the end plates are provided in the form of floats, and the wing panels are provided with wing strakes at the point of their coupling to the wing center section, wherein the wing angle to the horizontal of the wing strakes is not smaller than the wing angle to the horizontal of the wing panels.
